(19) Europäisches Patentamt
European Patent Office
Office européen des brevets

(11) EP 1 873 562 A1

(12) **EUROPEAN PATENT APPLICATION**
published in accordance with Art. 153(4) EPC

(43) Date of publication:
**02.01.2008 Bulletin 2008/01**

(21) Application number: **06731936.8**

(22) Date of filing: **11.04.2006**

(51) Int Cl.:
***G02B 5/08*** (2006.01)

(86) International application number:
**PCT/JP2006/308000**

(87) International publication number:
**WO 2006/112425 (26.10.2006 Gazette 2006/43)**

(84) Designated Contracting States:
**AT BE BG CH CY CZ DE DK EE ES FI FR GB GR HU IE IS IT LI LT LU LV MC NL PL PT RO SE SI SK TR**

(30) Priority: 14.04.2005 JP 2005116708
09.09.2005 JP 2005262126
09.09.2005 JP 2005262127
18.10.2005 JP 2005302815

(71) Applicant: **TEIJIN LIMITED**
**Osaka-shi**
**Osaka 541-0054 (JP)**

(72) Inventors:
• **MIZUTANI, Kei, Tokyo Research Center**
**Hino-shi, Tokyo 191-0065 (JP)**
• **KUSHIDA, Takashi, Tokyo Research Center**
**Hino-shi, Tokyo 191-0065 (JP)**
• **KITAZAWA, Satoshi, Tokyo Research Center**
**Hino-shi, Tokyo 191-0065 (JP)**
• **FURUYA, Koji, Matsuyama Factory**
**Matsuyama-shi, Ehime 791-8044 (JP)**
• **OHNO, Takao, Matsuyama Factory**
**Matsuyama-shi, Ehime 791-8044 (JP)**

(74) Representative: **Hallybone, Huw George et al**
**Carpmaels and Ransford**
**43-45 Bloomsbury Square**
**London WC1A 2RA (GB)**

(54) **REFLECTIVE SHEET AND METHOD FOR PRODUCING SAME**

(57) There is provided a reflective sheet made of self-sustaining porous sheet which comprises inert particles and a polyolefin and which has a porosity of 30 to 95% and a reflectivity at a wavelength of 550 nm of 60 to 120%. This reflective sheet can be reduced in thickness and weight while retaining sufficient reflectivity.

EP 1 873 562 A1

**Description**

Field of the Invention

The present invention relates to a reflective sheet and a production method thereof. More specifically, the present invention relates to a reflective sheet which is suitably used in a backlight source of a liquid crystal display or display unit or in a backlight unit having a thickness of not larger than 1 cm for a thin panel using an LED or cold-cathode tube as a light source for a cellular phone, PDA or the like and a production method thereof.

Background Art

In recent years, reflective sheets have been used in a variety of fields. In particular, a number of reflective sheets have been used as main components of liquid crystal displays for cellular phones, personal computers and televisions. Particularly, it is important that liquid crystal displays used in cellular phones can be reduced in thickness, power consumption and weight. Further, an improvement in the display quality of the liquid crystal displays is also desired, and to achieve the improvement, it is required to supply a large amount of light to the liquid crystal portion. To meet the requirement, it is necessary to increase the amount of light supplied from a light source, and a reflective sheet that has high reflection efficiency and provides high brightness has been demanded.

Backlight units for liquid crystal displays include those having a light source disposed directly underneath the liquid crystal portion and those having a light source disposed next to a transparent light guide panel. In the former type of backlight units, a reflector is disposed under the liquid crystal portion such that it reflects light from the lamp, and in the latter type of backlight units, a reflector is disposed next to the light guide panel such that it covers the lamp and under the light guide panel such that it reflects light from the light guide panel. These reflective sheets are required to not only have high reflection efficiency but also have excellent punchability and bendability in consideration of productivity.

Heretofore, as this reflective sheet, a reflective sheet having a thin metal film layer composed essentially of silver laminated on the surface of a metal plate such as aluminum or a polymer film, a metal plate such as aluminum coated with a white pigment, or a white polyethylene terephthalate sheet is used (refer to JP-A 2-13925 and JP-A 59-8782). Further, in addition to the polyethylene terephthalate sheet, a polyolefinic reflective sheet has also been reported (refer to Japanese Utility Model Laid-Open Publication No. 57-60119).

Further, JP-A 2005-4195 and JP-A 2005-307730 disclose a filler-containing light reflector using a widely used polyolefin resin as a polyolefin. More specifically, a relatively thick laminate having a thickness of larger than 100 $\mu$m is disclosed in Examples.

Further, WO91/01346 discloses a method for producing a thin, self-sustaining unprocessed compressed product by converting a solution of a binder dissolved in a solvent into an intermediate at temperatures equal to or higher than the gelation temperature, stretching the intermediate while quenching the intermediate to temperatures equal to or lower than the gelation temperature, and adding at least 45 vol% of inorganic material.

In recent years, reflective sheets comprising a sheet having fine air bubbles, a porous sheet containing a specific amount of an inorganic filler and a laminated sheet thereof have been reported (refer to JP-A 7-230004 and JP-A 2002-98811 and Japanese Utility Model Laid-Open Publication No. 136619/2003). The reflective sheet achieves excellent light reflectivity by not only having a reflective layer on the surface of the reflective sheet but also containing a number of reflective layers inside the reflective sheet.

However, when reflectivity as a reflective sheet is to be further improved in the inventions described in the above patent literatures, it is required to increase the thickness of the sheet itself, the number of the bubbles or the amount of the inorganic filler. However, as a result, it is feared that deterioration in mechanical strength may occur or it may become difficult to achieve a reduction in thickness.

Disclosure of the Invention

An object of the present invention is to provide a reflective sheet having thickness and weight reduced while retaining sufficient reflectivity.

Another object of the present invention is to provide an industrially advantageous production method of the above reflective sheet.

Other objects and advantages of the present invention will become apparent from the following description.

According to the present invention, firstly, the above objects and advantages of the present invention are achieved by a reflective sheet which:

comprises 2 to 95 wt% of polyolefin and 5 to 98 wt% of inert fine particles,
is so porous as to have a porosity of 30 to 95 vol%, has a reflectivity at a wavelength of 550 nm of 60 to 120%, and has a thickness of 100 μm or smaller.

According to the present invention, secondly, the above objects and advantages of the present invention are achieved by a substrate-attached reflective sheet comprising the above reflective sheet of the present invention and a substrate film bonded on at least one surface of the above reflective sheet.

Further, according to the present invention, thirdly, the above objects and advantages of the present invention are achieved by a method for producing the reflective sheet of the present invention, comprising:

preparing a thermoreversible sol/gel solution
comprising the polyolefin, the inert fine particles and a solvent,
extruding the thermoreversible sol/gel solution from a slit to form a gelled sheet, and
removing the solvent from the above gelled sheet and then stretching the sheet.

Brief Description of the Drawings

Fig. 1 is an SEM photograph of a cross section of a sheet obtained in Example 8.

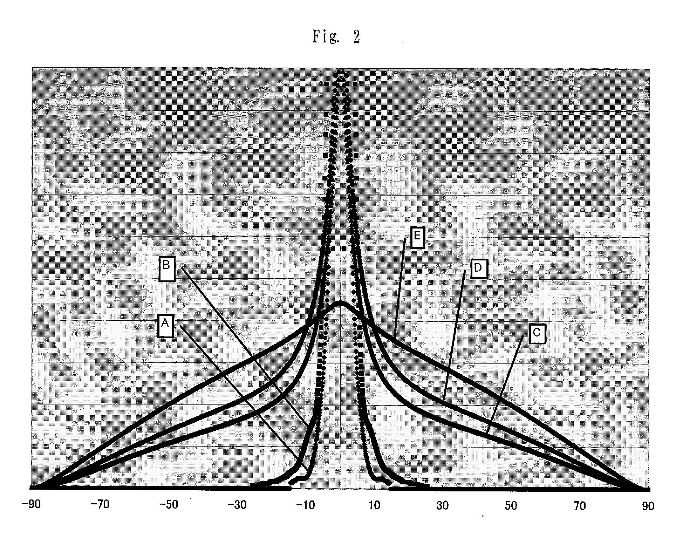

Fig. 2 is a diagram illustrating the relationships between an incident angle and reflection intensity for a substrate-attached sheet obtained in Example 10 and films for comparison.

Best Mode for Carrying out the Invention

A reflective sheet of the present invention comprises inert particles and a polyolefin. The reflective sheet contains the particles in a proportion of 5 to 98%, in terms of weight percentage based on the total amount of the inert particles and the thermoplastic resin. The content of the inert particles is preferably 75 to 98%, more preferably 85 to 98%. When the content of the inert particles is higher than 98%, a problem may occur in mechanical strength. Meanwhile, when the content of the particles is lower than 5%, a reflecting/scattering interface comprising the thermoplastic resin layer, an air layer and the particles decreases, so that sufficient reflectivity cannot be obtained.

Further, the reflective sheet of the present invention is self-sustaining. "Self-sustaining" means that the sheet can be handled as a film without using a cover film or a base film. Further, the reflective sheet of the present invention has a thickness of 100 μm or smaller. When the thickness is larger than 100 μm, the flexibility of the reflective sheet may be deteriorated.

The reflective sheet of the present invention is porous and has a porosity of 30 to 95 vol%. When the porosity of the sheet is lower than 30 vol%, the interface between the resin layer and air layer of the sheet where reflection occurs decreases, resulting in poor reflectivity. Meanwhile, when porosity is higher than 95 vol%, a problem occurs in the moldability, stretchability and the like of the reflective sheet. The said "porous" can be seen as virtually continuous pores formed in the reflective sheet. More specifically, the porous sheet in the present invention has a unique structure that there are not a number of independent bubbles but fibrillar polyolefins entangle one another in the form of a net and include a number of pores as a whole.

Further, the reflective sheet of the present invention has a reflectivity at a wavelength of 550 nm of 60 to 120%. When the reflectivity is lower than 60%, sufficient brightness cannot be obtained when the reflective sheet is used as a base material for a backlight reflector of a liquid crystal display. Meanwhile, when the reflectivity is at least 120%, the reflective sheet has a sufficient reflection characteristic, and a further increase in the reflectivity may influence the weight and bulk of the reflective sheet.

Further, it has been confirmed that intensity distribution of scattered light measured by a gonio photo meter correlates with an increase in the brightness of a liquid crystal display. Scattered light intensity at an output angle of 30° is preferably 50 to 85% and scattered light intensity at an output angle of 60° is preferably 25 to 50%, with respect to light intensity at an output angle of 0° of the scattered light profile measured by the gonio photo meter of the sheet. The scattered light intensity at an output angle of 30° with respect to light intensity at an output angle of 0° is preferably 55 to 80%, more preferably 55 to 75%. Further, the scattered light intensity at an output angle of 60° is preferably 25 to 45%, more preferably 30 to 40%.

In the present invention, the specific gravity of the sheet is preferably 2.0 or lower from the viewpoint of a reduction in weight. Preferred examples of the polyolefin used in the sheet include a polyethylene, a polypropylene and a mixture thereof. Of these, the polyethylene is preferred.

Further, the above polyolefin in the present invention preferably has an intrinsic viscosity measured at 135°C in decalin of at least 5 dl/g. When it is lower than 5 dl/g, the strength of the film may become insufficient. The intrinsic viscosity is more preferably 7 dl/g or higher.

The inert particles used in the present invention may be inorganic particles, organic particles, inorganic particles coated with an organic polymer or inorganic-organic composite particles.

Illustrative examples of the inorganic particles include calcium carbonate, barium sulfate, barium titanate, titanium oxide, talc, clay, silica, aluminosilicate, zinc oxide, zinc sulfide, zinc white, lead titanate, zirconia oxide, barium sulfide, strontium titanate, and mica.

Meanwhile, illustrative examples of the organic particles include organic polymer cross-linked particles comprising a silicone resin, styrene resin, urethane resin, polyester, polyamide or acrylic resin. From the viewpoints of reflection efficiency, costs and disposal of the sheet, inorganic particles are preferably used. Of these, calcium carbonate, barium sulfate, titanium oxide, silica, aluminosilicate, zinc oxide, zinc sulfide, zinc white, lead titanate, zirconia oxide, barium sulfide, strontium titanate and mica are preferred. In particular, inorganic particles having a refractive index of 1.9 or higher, i.e. zinc oxide, zinc sulfide, zinc white, lead titanate, zirconia oxide, titanium oxide, barium titanate, barium sulfide, strontium titanate and mica are more preferred. From the viewpoints of reflection efficiency, costs and disposal of the sheet, titanium oxide, barium titanate and zirconia oxide are particularly preferred.

Further, the average particle diameter of these inert particles is preferably 0.01 to 90 $\mu$m. When the average particle diameter is smaller than 0.01 $\mu$m, the sheet lacks a reflective performance disadvantageously. Meanwhile, when it is larger than 90 $\mu$m, a breakage occurs during production of the sheet, thereby decreasing productivity, or a diffuse reflection component increases, resulting in a reflection characteristic equal to or lower than those of conventional white films disadvantageously. The average particle diameter of the inert particles is more preferably 0.01 to 10 $\mu$m, particularly preferably 0.1 to 5 $\mu$m.

The reflective sheet of the present invention, as described above, is produced by:

preparing a thermoreversible sol/gel solution
comprising the polyolefin, the inert fine particles and a solvent,
extruding the thermoreversible sol/gel solution from a slit to form a gelled sheet, and
removing the solvent from the above gelled sheet and then stretching the sheet.

The above thermoreversible sol/gel solution can be prepared by dispersing the inert fine particles in an appropriate gelling solvent by use of a milling device or the like, adding the polyolefin as an adhesive and an additional amount of the above appropriate gelling solvent, and then dissolving the polyolefin in the solvent by heating to form sol.

As the above solvent, when a polyethylene is used, for example, decalin, hexane, paraffin, xylene or the like is preferably used. These may be used in combination of two or more.

The thus obtained sol/gel solution is molded into a sheet at temperatures equal to or higher than the gelation temperature, and the sheet is quenched to temperatures equal to or lower than the gelation point to prepare a gelled sheet. After the solvent is partially or fully removed from the gelled sheet, the sheet is monoaxially or biaxially stretched at temperatures equal to or higher than the glass transition point of the polyolefin and then heat-set. Thereby, the reflective sheet of the present invention can be prepared. The sheet can be stretched with a certain amount of the solvent allowed to remain by controlled drying.

As described above, the reflective sheet of the present invention is preferably at least monoaxially stretched. By stretching, a layer structure develops and a reflecting interface increases. As a result, glares can be suppressed while high reflectivity is achieved.

Illustrative examples of a method for stretching the sheet of the present invention include longitudinal-transverse sequential biaxial stretching, longitudinal-transverse simultaneous biaxial stretching, longitudinal monoaxial stretching, and transverse monoaxial stretching. To control the direction and intensity distribution of reflected light and obtain a good reflection characteristic, the longitudinal-transverse simultaneous biaxial stretching or longitudinal-transverse sequential biaxial stretching is preferred, and in consideration of productivity and costs, the longitudinal-transverse sequential biaxial stretching is the most preferred.

Although the reflective sheet of the present invention can be used as a reflective sheet as it is because it is self-sustaining, it can also be applied to another substrate film and used as a substrate-attached reflective sheet so as to aid cutting of the reflective sheet or to facilitate insertion or placement in a liquid crystal backlight panel. Thereby, detachment of the inorganic filler can be prevented advantageously. The substrate film may exist on one or both surfaces of the reflective sheet. When it exists on both surfaces, for example, it is possible that the substrate film on one surface of the reflective sheet is a transparent film and the substrate film on the other surface is a transparent or opaque film. For example, a metal plate made of aluminum or steel or other plastic sheet as the substrate film can be applied to one surface of the reflective sheet by use of an adhesive or double-sided adhesive tape and handled as a substrate-attached composite reflective sheet.

The thickness of the substrate film is preferably 10 to 200 $\mu$m. When the thickness is smaller than 10 $\mu$m, a problem of handling or the like may occur. Meanwhile, when the thickness is larger than 200 $\mu$m, a request for thinning of the reflective sheet becomes difficult to meet.

The reflective sheet of the present invention may contain additives which impart functionality such as a lubricant, pigment, dye, antioxidant, fluorescent brightener, antistatic agent, antimicrobial agent, ultraviolet absorber, light stabilizer, thermal stabilizer, light blocking agent and delustering agent as required as long as the objects of the present invention are achieved.

Examples

Hereinafter, the present invention will be further described with reference to specific examples. However, the present invention shall not be limited to these examples. Values in the examples were measured in the following manners.

(1) Reflectivity:

An integrating sphere was attached to a spectrophotometer (trade name "UV-3101PC" of Shimadzu Corporation), and reflectivity was measured over 400 to 800 nm at a measuring light incident (reflection) angle of 5° when a $BaSO_4$ white panel was 100%. Comparison was made with reflectivity (%) at 550 nm.

(2) Porosity:

Porosity was determined as below from the density $\rho$ of measured sheet material and the theoretical density $\rho_0$ of poreless sheet material.

$$\text{Porosity} = (\rho_0 - \rho) / \rho_0 \times 100 \ (\%)$$

(3) Thickness of Sheet Material:

This was measured in a noncontact manner by a scanning electron microscope or laser microscope after a cross section was exposed by a freeze-fracture method.

(4) Specific Gravity of Sheet Material:

This was determined by measuring the weight of sheet material fragment having a known volume.

(5) Intrinsic Viscosity of Polyolefin:

This was determined based on the result of measurement at 135°C in decalin.

(6) Refractive Index of Inorganic Particles:

Liquid having a different refractive index was put in a test tube, and inorganic particles were added thereto and shaken well. The refractive index of the inorganic particles was represented by the refractive index of the liquid which had become transparent.

(7) Measurement of Scattered Light Profile:

A reflective sheet was disposed perpendicularly to incident light and a scattered light profile was measured in all directions by use of an automatic angle-changing photometer GP-5 (product of MURAKAMI COLOR RESEARCH LABORATORY). From this profile, scattered light intensities at 30° and 60° with respect to an output angle of 0° were determined.

(8) Brightness:

A reflective sheet was incorporated into a backlight and measured. The backlight used was a straight-tube one-lamp edge-type backlight (14.1 inches) used in a notebook computer prepared for evaluation, and the reflective sheet to be measured was incorporated in place of a reflective sheet which had originally been incorporated. The measurement was made by dividing the surface of the backlight into 4 sections of 2 x 2 and determining brightness at the front, 60° and 30° after the light was lit for 1 hour. The brightness was measured by means of BM-7 of Topcon Corporation. The measurement results were evaluated based on the following criteria.

O: Brightnesses at the front, 30˚ and 60˚ are higher than those of originally incorporated reflective sheet.
Δ: Brightnesses at the front, 30˚ and 60˚ are equal to those of originally incorporated reflective sheet ($\pm$30 cd/m$^2$).
×: Brightnesses at the front, 30˚ and 60˚ are lower than those of originally incorporated reflective sheet.

Example 1

To 22 parts by weight of decalin, 14 parts by weight of paraffin oil (Ondina Oil 68 of Shell International Research Maatschappij B.V.(abbreviated as "Shell" hereinafter) and 6 parts by weight of ultrahigh molecular weight polyethylene ("HI-ZEX MILLION" 240M of Mitsui Chemicals, Inc.) having an intrinsic viscosity of 15 dl/g (measured at 135˚C in decalin) were added, and 89 parts by weight of barium titanate ("BT-HP9DX" of KCM Corporation Co., Ltd.) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 300 μm.
The paraffin-oil-containing sheet in which a paraffin oil is remaining was sequentially biaxially stretched to 4.5 times in the MD direction and then to 10 times in the TD direction at a stretch temperature of 115˚C and then heat-set at 135˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 1.

Example 2

To 46 parts by weight of decalin, 5 parts by weight of paraffin oil (Ondina Oil 68 of Shell) and 17 parts by weight of ultrahigh molecular weight polyethylene ("HI-ZEX MILLION" 240M of Mitsui Chemicals, Inc.) having an intrinsic viscosity of 15 dl/g (measured at 135˚C in decalin) were added, and 9 parts by weight of barium sulfate (B-54 of Sakai Chemical Industry Co., Ltd.) was dispersed therein.
The dispersion was dissolved at 180˚C by use of a twin-screw kneading extruder to form sol, and the sol was extruded at 160˚C via a flat-film extrusion die.
Then, the extruded product was passed through a water bath to be cooled and gelated. The thus molded sheet was dried at 80˚C for 1 hour to remove decalin. The sheet had a thickness of 300 μm.
The paraffin-oil-containing sheet in which a paraffin oil is remaining was sequentially biaxially stretched to 4.5 times in the MD direction and then to 10 times in the TD direction at a stretch temperature of 115˚C and then heat-set at 135˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 1.

Example 3

To 50 parts by weight of decalin, 6 parts by weight of paraffin oil (Ondina Oil 68 of Shell), 7 parts by weight of ultrahigh molecular weight polyethylene ("HI-ZEX MILLION" 240M of Mitsui Chemicals, Inc.) and 11 parts by weight of high-density polyethylene (HD6720 of DSM) were added. This polyethylene blend resin had an intrinsic viscosity of 8 dl/g. Then, 9 parts by weight of rutile-type titanium dioxide particles (TA-300 of Fuji Titanium Industry Co., Ltd.) were added and dispersed therein.
The dispersion was dissolved at 180˚C by use of a twin-screw kneading extruder to form sol, and the sol was extruded at 160˚C via a flat-film extrusion die. Then, the extruded product was passed through a water bath to be cooled and gelated. The thus molded sheet was dried at 60˚C for 1 hour to remove decalin. The sheet had a thickness of 700 μm.
The paraffin-oil-containing sheet in which a paraffin oil is remaining was sequentially biaxially stretched to 3 times in the MD direction at a stretch temperature of 115˚C and then to 10 times in the TD direction at 120˚C. Subsequently, the paraffin oil was extracted from the sheet by use of hexane, and the resulting sheet was dried at 60˚C for 1 hour and then heat-set at 140˚C for 3 minutes. The obtained sheet was a porous sheet having a layer structure in the thickness direction and had properties shown in the following Table 1.

Example 4

To 21 parts by weight of decalin, 13 parts by weight of paraffin oil (Ondina Oil 68 of Shell) and 6 parts by weight of ultrahigh molecular weight polyethylene ("HI-ZEX MILLION" 240M of Mitsui Chemicals, Inc.) having an intrinsic viscosity of 15 dl/g (measured at 135˚C in decalin) were added, and 34 parts by weight of calcium carbonate (SUPER#2000 of MARUO CALCIUM CO., LTD.) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 300 $\mu$m.

The paraffin-oil-containing sheet in which a paraffin oil is remaining was sequentially biaxially stretched to 4.5 times in the MD direction and then to 10 times in the TD direction at a stretch temperature of 115˚C and then heat-set at 135˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 1.

Example 5

The film prepared in Example 1 was applied to a white PET film ("Melinex" 399 of Teijin DuPont Films Japan Limited, thickness: 38 $\mu$m) by use of an adhesive (SK-DYNE 1811L of Soken Chemical & Engineering Co., Ltd.). The properties of this substrate-attached sheet are shown in Table 1.

Table 1

|       | Thickness | Porosity | Specific Gravity | Reflectivity (550 nm) |
|-------|-----------|----------|------------------|-----------------------|
| Ex.1  | 20 $\mu$m | 71%      | 1.2              | 88%                   |
| Ex.2  | 32 $\mu$m | 82%      | 0.26             | 78%                   |
| Ex.3  | 26 $\mu$m | 80%      | 0.26             | 78%                   |
| Ex.4  | 20 $\mu$m | 71%      | 0.6              | 87%                   |
| Ex.5  | 58 $\mu$m | -        | -                | 93%                   |
| Ex.: Example | | | | |

Example 6

To 32 parts by weight of decalin, 19 parts by weight of paraffin oil (Ondina Oil 68 of Shell) and 6 parts by weight of ultrahigh molecular weight polyethylene ("GUR" 4032 of Ticona GmbH) having an intrinsic viscosity of 22 dl/g (measured at 135˚C in decalin) were added, and 73 parts by weight of barium titanate (BT-HP9DX of KCM Corporation Co., Ltd.) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 300 $\mu$m.

The paraffin-oil-containing sheet in which a paraffin oil is remaining was sequentially biaxially stretched to 4.5 times in the MD direction and then to 10 times in the TD direction at a stretch temperature of 115˚C and then heat-set at 140˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 2.

Example 7

To 50 parts by weight of decalin, 31 parts by weight of paraffin oil (Ondina Oil 68 of Shell) and 9 parts by weight of ultrahigh molecular weight polyethylene ("GUR" 4032 of Ticona) having an intrinsic viscosity of 22 dl/g (measured at 135˚C in decalin) were added, and 40 parts by weight of rutile-type titanium dioxide (KR-380 of Titan Kogyo K.K.) was dispersed therein.

The dispersion was dissolved at 180˚C by use of a twin-screw kneading extruder to form sol, and the sol was extruded at 160˚C via a flat-film extrusion die.

Then, the extruded product was passed through a water bath to be cooled and gelated. The thus molded sheet was dried at 80˚C for 1 hour to remove decalin. The sheet had a thickness of 300 $\mu$m.

The paraffin-oil-containing sheet in which a paraffin oil is remaining was sequentially biaxially stretched to 4.5 times in the MD direction and then to 10 times in the TD direction at a stretch temperature of 115˚C and then heat-set at 140˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 2.

Example 8

To 64 parts by weight of decalin, 39 parts by weight of paraffin oil (Ondina Oil 68 of Shell), 8 parts by weight of ultrahigh molecular weight polyethylene ("GUR" 4032 of Ticona GmbH) and 2 parts by weight of high-density polyethylene ("GUR" 2105 of Ticona GmbH) were added. This polyethylene blend resin had an intrinsic viscosity of 18.6 dl/g. Then, 16 parts by weight of zinc oxide particles (product of Sakai Chemical Industry Co., Ltd., one type) were added and dispersed therein. The dispersion was dissolved at 180˚C by use of a twin-screw kneading extruder to form sol, and the sol was extruded at 160˚C via a flat-film extrusion die. Then, the extruded product was passed through a water bath to be cooled and gelated. The thus molded sheet was dried at 60˚C for 1 hour to remove decalin. The sheet had a thickness of 700 μm.

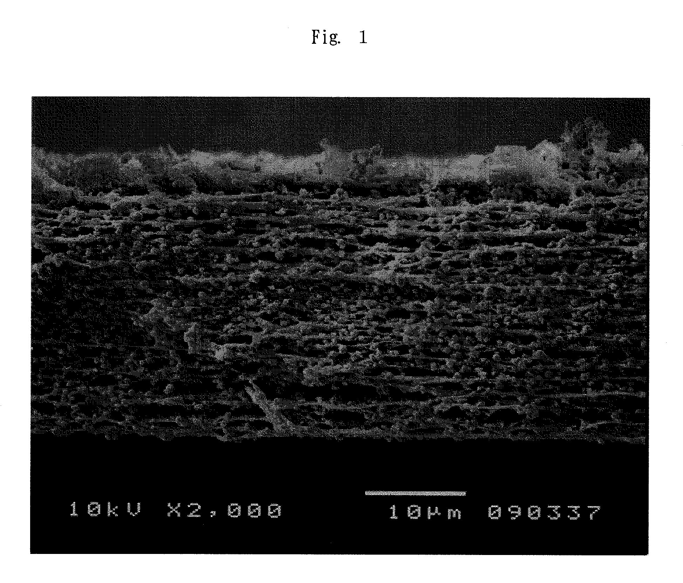

The paraffin-oil-containing sheet in which a paraffin oil is remaining was sequentially biaxially stretched to 3 times in the MD direction at a stretch temperature of 115˚C and then to 10 times in the TD direction at 120˚C and then heat-set at 140˚C for 2 minutes. Then, the paraffin oil was extracted from the sheet by use of hexane, and the resulting sheet was dried at 60˚C for 1 hour and then heat-set at 120˚C for 3 minutes. The obtained sheet was a porous sheet having a layer structure in the thickness direction as can be seen in an SEM photograph of Fig. 1 and had properties shown in the following Table 2.

Example 9

To 44 parts by weight of decalin, 26 parts by weight of paraffin oil (Ondina Oil 68 of Shell) and 7 parts by weight of ultrahigh molecular weight polyethylene ("GUR" 4032 of Ticona GmbH) having an intrinsic viscosity of 15 dl/g (measured at 135˚C in decalin) were added, and 53 parts by weight of calcium carbonate (modified MSK PO of MARUO CALCIUM CO., LTD.) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 300 μm.

The paraffin-oil-containing sheet in which a paraffin oil is remaining was sequentially biaxially stretched to 4.5 times in the MD direction and then to 10 times in the TD direction at a stretch temperature of 115˚C and then heat-set at 140˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 2.

Example 10

The film prepared in Example 6 was applied to a white PET film ("Melinex" 399 of Teijin DuPont Films Japan Limited, thickness: 38 μm) by use of an adhesive ("SK-DYNE" 1811L of Soken Chemical & Engineering Co., Ltd.). The properties of this substrate-attached sheet are shown in Table 2. The obtained film was measured for reflection intensity with respect to an incident angle. For this measurement, a gonio photo meter of Murakami Color Research Laboratory was used. The measurement was made, with light having a wavelength of 550 nm allowed to enter from the 0˚ direction of the sheet, at an angular interval of 1˚ within a range of -90 to 90˚ (curve E).

The vertical axis of the graph represents relative reflection intensity, and its horizontal axis represents an incident angle.

As reference data, this measurement was made on ESR of 3M (curve A), a silver reflective film (curve B), and a film of Comparative Example 2 (curve C) and a film of Comparative Example 1 (curve D) which will be described later, and the measurement results were graphed. It can be seen from this graph that the reflection intensity pattern of the reflective sheet of the present invention (curve E) has a much wider angle than other films and is close to a perfect scattering pattern (lumber cyan). Therefore, very natural white light which is soft to the eyes is obtained, and glares and the like hardly occur. Further, when this reflective sheet is actually used as a reflective film for a backlight, the direction or polarization of light returning from a prism sheet, reflecting polarizing plate or the like placed on a light guide panel is resolved by perfect diffusion, so that an effect of increasing light reuse efficiency and increasing brightness as a backlight can be expected.

Comparative Example 1

A raw material prepared by mixing 112 wt% of polyethylene terephthalate resin having an intrinsic viscosity (IV) of 0.62 dl/g (in o-chlorophenol, 35˚C, c = 0.5 dl/g) with 76 wt% of rutile-type titanium dioxide particles (TA-300 of Fuji Titanium Industry Co., Ltd.) having an average particle diameter of 0.3 $\mu$m was fed to and pre-kneaded in a vented twin-screw extruder. This molten resin was continuously fed to a vented single-screw kneader, kneaded and extruded, and the obtained strand was cooled and cut to prepare titanium-dioxide-particle-containing master pellets.

After the master pellets were vacuum-dried at 140˚C for 8 hours, these film raw materials were fed to a vented twin-screw extruder and co-extruded from a T die onto a cooling roll adjusted to 15˚C to prepare an unstretched film having a thickness of 1,800 $\mu$m by adjusting the discharge rate of the extruder.

The obtained unstretched film was uniformly heated to 75˚C by use of a heating roll and stretched (MD ratio) to 3.1 times in the longitudinal direction (MD direction) between two pairs of nip rolls differing in circumferential velocity (low-speed roll: 10 m/min, high-speed roll: 31 m/min).

At that time, as auxiliary heaters for the film, light-collecting infrared heaters (rated output: 74 W/cm) having a gold reflective film were disposed in the middle of the nip rolls and at positions 1 cm away from the surfaces of the film such that the heaters faced both surfaces of the film. Further, the film was stretched to 3.2 times in the transverse direction (TD direction) by use of a clip tenter having a preheating temperature of 90˚C, a stretch temperature of 120˚C, a heat-setting temperature of 240˚C and a cooling temperature of 100˚C to prepare a white polyester film as a reflective sheet. The obtained reflective sheet had a thickness of 188 $\mu$m, a specific gravity of 1.4 g/cm$^3$, a porosity of 15% and a reflectivity at a wavelength of 400 to 800 nm of 80 to 85%. When the cross section structure of the film was observed, no layer structure could not be observed. Independent pores were scattered therein. The number of pores on the surface was 24.

Comparative Example 2

The procedure of Comparative Example 1 was repeated except that an unstretched film having a thickness of 400 $\mu$m in place of 1,800 $\mu$m was prepared by adjusting the discharge rate of the extruder. The properties of the obtained reflective sheet are shown in the following Table 2.

Table 2

| | Thickness | Porosity | Specific Gravity | Reflectivity (550 nm) | Scattered Light Intensity | | Brightness |
|---|---|---|---|---|---|---|---|
| | | | | | 30˚ | 60˚ | |
| Ex.6 | 34 $\mu$m | 68% | 1.31 | 94% | 68 | 37 | O |
| Ex.7 | 20 $\mu$m | 61% | 1.00 | 88% | 58 | 32 | O |
| Ex.8 | 25 $\mu$m | 71% | 0.88 | 85% | 57 | 30 | O |
| Ex.9 | 23 $\mu$m | 53% | 0.74 | 84% | 57 | 29 | O |
| Ex.10 | 72 $\mu$m | - | - | 96% | 69 | 37 | O |
| C.Ex.1 | 188 $\mu$m | 15% | 1.4 | 90% | 14 | 7 | × |
| C.Ex.2 | 38 $\mu$m | 15% | 1.4 | 73% | 12 | 6 | × |
| Ex.: Example, C.Ex.: Comparative Example | | | | | | | |

Example 11

To 28 parts by weight of decalin, 18 parts by weight of paraffin oil (Ondina Oil 68 of Shell) and 8 parts by weight of ultrahigh molecular weight polyethylene ("GUR" 4032 of Ticona GmbH) having an intrinsic viscosity of 22 dl/g (measured at 135˚C in decalin) were added, and 35 parts by weight of barium titanate (BT-HP9DX of KCM Corporation Co., Ltd.) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 500 $\mu$m.

The paraffin-oil-containing sheet in which a paraffin oil is remaining was sequentially biaxially stretched to 4.5 times in the MD direction and then to 10 times in the TD direction at a stretch temperature of 110˚C and then heat-set at 140˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 3.

Example 12

To 18 parts by weight of decalin, 11 parts by weight of paraffin oil (Ondina Oil 68 of Shell) and 5 parts by weight of ultrahigh molecular weight polyethylene ("GUR" 4032 of Ticona GmbH) having an intrinsic viscosity of 22 dl/g (measured at 135˚C in decalin) were added, and 25 parts by weight of rutile-type titanium dioxide (KR-380 of Titan Kogyo K.K.) was dispersed therein.

The dispersion was dissolved at 180˚C by use of a twin-screw kneading extruder to form sol, and the sol was extruded at 160˚C via a flat-film extrusion die.

Then, the extruded product was passed through a water bath to be cooled and gelated. The thus molded sheet was dried at 80˚C for 1 hour to remove decalin. The sheet had a thickness of 500 $\mu$m.

The paraffin-oil-containing sheet in which a paraffin oil is remaining was sequentially biaxially stretched to 4.5 times in the MD direction and then to 10 times in the TD direction at a stretch temperature of 110˚C and then heat-set at 140˚C for 2 minutes. Subsequently, the paraffin oil was extracted from the sheet by use of hexane, and the resulting sheet was dried at 60˚C for 10 minutes and then heat-set at 120˚C for 3 minutes. The properties of the obtained sheet are shown in Table 3.

Example 13

To 18 parts by weight of decalin, 11 parts by weight of paraffin oil (Ondina Oil 68 of Shell), 4 parts by weight of ultrahigh molecular weight polyethylene ("GUR" 4032 of Ticona GmbH) and 1 part by weight of high-density polyethylene ("GUR" 2105 of Ticona GmbH) were added. This polyethylene blend resin had an intrinsic viscosity of 18.6 dl/g. Then, 33 parts by weight of zirconia oxide (UEP of DAIICHI KIGENSO KAGAKU KOGYO CO., LTD.) was added and dispersed therein. The dispersion was dissolved at 180˚C by use of a twin-screw kneading extruder to form sol, and the sol was extruded at 160˚C via a flat-film extrusion die. Then, the extruded product was passed through a water bath to be cooled and gelated. The thus molded sheet was dried at 60˚C for 1 hour to remove decalin. The sheet had a thickness of 600 $\mu$m.

The paraffin-oil-containing sheet in which a paraffin oil is remaining was sequentially biaxially stretched to 3 times in the MD direction at a stretch temperature of 115˚C and then to 10 times in the TD direction at 120˚C and then heat-set at 140˚C for 2 minutes. Then, the paraffin oil was extracted from the sheet by use of hexane, and the resulting sheet was dried at 60˚C for 1 hour and heat-set at 120˚C for 3 minutes. The obtained sheet was a porous sheet having a layer structure in the thickness direction and had properties shown in the following Table 3.

Example 14

To 18 parts by weight of decalin, 11 parts by weight of paraffin oil (Ondina Oil 68 of Shell) and 5 parts by weight of ultrahigh molecular weight polyethylene ("GUR" 4032 of Ticona GmbH) having an intrinsic viscosity of 15 dl/g (measured at 135˚C in decalin) were added, and 34 parts by weight of zinc oxide (product of Sakai Chemical Industry Co., Ltd., one type) was dispersed therein. The dispersion was dissolved at 180˚C by use of a twin-screw kneading extruder to form sol, and the sol was extruded at 150˚C via a flat-film extrusion die. Then, the extruded product was passed through a water bath to be cooled and gelated. The thus molded sheet was dried at 80˚C for 1 hour to remove decalin. The sheet had a thickness of 500 $\mu$m.

The paraffin-oil-containing sheet in which a paraffin oil is remaining was sequentially biaxially stretched to 4.5 times in the MD direction and then to 10 times in the TD direction at a stretch temperature of 115˚C and then heat-set at 140˚C for 2 minutes. Then, the paraffin oil was extracted from the sheet by use of hexane, and the resulting sheet was dried at 60˚C for 10 minutes and then heat-set at 120˚C for 3 minutes. The properties of the obtained sheet are shown in Table 3.

Example 15

The film prepared in Example 11 was applied to a white PET film ("Melinex" 399 of Teijin DuPont Films Japan Limited, thickness: 38 $\mu$m) by use of an adhesive ("SK-DYNE" 1811L of Soken Chemical & Engineering Co., Ltd.). The properties of this substrate-attached sheet are shown in Table 3.

Table 3

| | Refractive Index of Particles | Thickness | Porosity | Specific Gravity | Reflectivity (550 nm) |
|---|---|---|---|---|---|
| Ex.11 | 2.40 | 40 $\mu$m | 58% | 1.44 | 98% |

(continued)

|  | Refractive Index of Particles | Thickness | Porosity | Specific Gravity | Reflectivity (550 nm) |
|---|---|---|---|---|---|
| Ex.12 | 2.71 | 41 μm | 61% | 1.10 | 97% |
| Ex.13 | 2.40 | 40 μm | 61% | 1.41 | 98% |
| Ex.14 | 1.95 | 39 μm | 64% | 1.21 | 96% |
| Ex.15 | 2.40 | 80 μm | - | - | 98% |
| Ex.: Example | | | | | |

Example 16

To 20 parts by weight of decalin, 13 parts by weight of paraffin, 5 parts by weight of ultrahigh molecular weight polyethylene (product of Ticona GmbH) having an intrinsic viscosity of 15 dl/g (measured at 135°C in decalin) and 2 parts by weight of dispersant were added, and 60 parts by weight of titanium oxide (product of Sakai Chemical Industry Co., Ltd.) was dispersed therein. The dispersion was dissolved at 170°C by use of a twin-screw kneading extruder and extruded at 160°C via a flat-film extrusion die. Then, the extruded product was solidified by cooling and then heat-treated at 80°C for 30 minutes. This sheet was stretched to 4.5 times in the MD direction and then to 10 times in the TD direction at 120°C and then heat-set at 130°C. Then, the sheet was rinsed with methylene chloride, dried, and heat-set at 120°C to prepare a porous sheet having a thickness of 75 μm, a porosity of 68% and a content of inorganic particles of 90 wt%.
On one surface of the porous sheet of the substrate sheet which became a reflecting surface, a transparent polyethylene terephthalate (PET) film ("TETORON" HPE film of Teijin DuPont Films Japan Limited (thickness: 16 μm) was laminated, and on the non-reflecting surface, a transparent PET film ("TETORON" HPE film of Teijin DuPont Films Japan Limited (thickness: 16 μm)) was laminated, to prepare a reflective sheet. To laminate the above PET films on both surfaces of the substrate sheet, an acrylic resin was applied on one surfaces of these PET films as an adhesive to form an adhesive layer (thickness: 2 μm). The properties of the obtained reflective sheet are shown in the following Table 4.

Example 17

The porous sheet of Example 16 was used. A reflective sheet was prepared in the same manner as in Example 16 except that a transparent PET film ("TETORON" G2 film of Teij in DuPont Films Japan Limited (thickness: 16 μm)) was laminated on the reflecting surface of the substrate sheet, and a transparent PET film ("TETORON" G2 film of Teij in DuPont Films Japan Limited (thickness: 16 μm)) was laminated on the non-reflecting surface. The properties of the obtained reflective sheet are shown in the following Table 4.

Example 18

The porous sheet of Example 16 was used. A reflective sheet was prepared in the same manner as in Example 16 except that a transparent polyolefin film ("ALPHAN" OPP film of OJI PAPER CO., LTD. (thickness: 9 μm)) was laminated on the reflecting surface of the substrate sheet, and a transparent PET film ("TETORON" G2 film of Teij in DuPont Films Japan Limited (thickness: 25 μm)) was laminated on the non-reflecting surface. The properties of the obtained reflective sheet are shown in the following Table 4.

Example 19

The porous sheet of Example 16 was used. A reflective sheet was prepared in the same manner as in Example 16 except that a transparent PET film ("TETORON" HB3 film of Teijin DuPont Films Japan Limited (thickness: 25 μm)) was laminated on the reflecting surface of the substrate sheet, and a transparent PET film ("TETORON" HB3 film of Teijin DuPont Films Japan Limited (thickness: 25 μm)) was laminated on the non-reflecting surface. The properties of the obtained reflective sheet are shown in the following Table 4.

Example 20

To 21 parts by weight of decalin, 12 parts by weight of paraffin, 5 parts by weight of ultrahigh molecular weight polyethylene (product of Ticona GmbH) having an intrinsic viscosity of 15 dl/g (measured at 135°C in decalin) and 2 parts by weight of dispersant were added, and 60 parts by weight of titanium oxide (product of Sakai Chemical Industry Co., Ltd.) was dispersed therein. The dispersion was dissolved at 165˚C by use of a twin-screw kneading extruder and extruded at 155˚C via a flat-film extrusion die. Then, the extruded product was solidified by cooling and then heat-treated at 80˚C for 20 minutes. This sheet was stretched to 5.0 times in the MD direction and then to 12 times in the TD direction at 125˚C and then heat-set at 130˚C. Then, the sheet was rinsed with methylene chloride, dried, and heat-set at 120˚C to prepare a porous sheet having a thickness of 40 $\mu$m, a porosity of 70% and a content of inorganic particles of 90 wt%.

On one surface of the porous sheet of the substrate sheet which became a reflecting surface, a transparent PET film ("TETORON" GE film of Teijin DuPont Films Japan Limited (thickness: 12 $\mu$m)) was laminated, and on the non-reflecting surface, a transparent PET film ("TETORON" GE film of Teijin DuPont Films Japan Limited (thickness: 12 $\mu$m)) was laminated, to prepare a reflective sheet. To laminate the above PET films on both surfaces of the substrate sheet, an acrylic resin was applied on one surfaces of these PET films as an adhesive to form an adhesive layer (thickness: 1 $\mu$m). The properties of the obtained reflective sheet are shown in the following Table 4.

Example 21

The porous sheet of Example 20 was used. A reflective sheet was prepared in the same manner as in Example 20 except that a transparent polyolefin film ("ALPHAN" OPP film of OJI PAPER CO., LTD. (thickness: 6 $\mu$m)) was laminated on the reflecting surface of the substrate sheet, and a transparent polyolefin film ("ALPHAN" OPP film of OJI PAPER CO., LTD. (thickness: 6 $\mu$m)) was laminated on the non-reflecting surface. The properties of the obtained reflective sheet are shown in the following Table 4.

Example 22

To 20 parts by weight of decalin, 13 parts by weight of paraffin, 5 parts by weight of ultrahigh molecular weight polyethylene (product of Ticona GmbH) having an intrinsic viscosity of 15 dl/g (measured at 135˚C in decalin) and 2 parts by weight of dispersant were added, and 60 parts by weight of barium titanate (product of KCM Corporation Co., Ltd.) was dispersed therein. The dispersion was dissolved at 160˚C by use of a twin-screw kneading extruder and extruded at 155˚C via a flat-film extrusion die. Then, the extruded product was solidified by cooling and then heat-treated at 80˚C for 15 minutes. This sheet was stretched to 6.0 times in the MD direction and then to 14 times in the TD direction at 120˚C and then heat-set at 130˚C. Then, the sheet was rinsed with methylene chloride, dried, and heat-set at 120˚C to prepare a porous sheet having a thickness of 20 $\mu$m, a porosity of 72% and a content of inorganic particles of 90 wt%.

A reflective sheet was prepared in the same manner as in Example 16 except that a transparent PET film ("TETORON" HB3 film of Teij in DuPont Films Japan Limited (thickness: 25 $\mu$m)) was laminated on the reflecting surface of the substrate sheet, and a transparent PET film ("TETORON" HB3 film of Teijin DuPont Films Japan Limited (thickness: 25 $\mu$m)) was laminated on the non-reflecting surface. The properties of the obtained reflective sheet are shown in the following Table 4.

Table 4

| Example | Reflectivity at 550 nm before Lamination (%) | Reflectivity at 550 nm after Lamination (%) | Decrease in Reflectivity (%) | Detached Inorganic Particles | Total Thickness ($\mu$m) |
|---|---|---|---|---|---|
| 16 | 98.5 | 98.4 | 0.1 | None | 109 |
| 17 | 98.5 | 98.3 | 0.2 | None | 109 |
| 18 | 98.5 | 98.6 | -0.1 | None | 110 |
| 19 | 97.8 | 97.7 | 0.1 | None | 126 |
| 20 | 98.0 | 97.9 | 0.1 | None | 65 |
| 21 | 98.0 | 98.1 | -0.1 | None | 53 |
| 22 | 95.0 | 95.0 | 0.0 | None | 71 |

As described above, according to the present invention, a reflective sheet can be provided that can be reduced in thickness and weight while retaining sufficient reflectivity. The reflective sheet can be suitably used particularly as a reflective sheet incorporated into a liquid crystal display of a cellular phone.

**Claims**

1. A reflective sheet which:

    comprises 2 to 95 wt% of polyolefin and 5 to 98 wt% of inert fine particles,
    is so porous as to have a porosity of 30 to 95 vol%, has a reflectivity at a wavelength of 550 nm of 60 to 120%, and has a thickness of 100 $\mu$m or smaller.

2. The reflective sheet of claim 1, which shows such a reflection characteristic that scattered light intensity at an output angle of 30° is 50 to 85% and scattered light intensity at an output angle of 60° is 25 to 50%, with respect to light intensity at an output angle of 0° of reflected light profile.

3. The reflective sheet of claim 1 or 2, wherein the polyolefin is a polyethylene, a polypropylene or a mixture thereof.

4. The reflective sheet of any of claims 1 to 3, wherein the polyolefin has an intrinsic viscosity measured at 135°C in decalin of at least 5 dl/g.

5. The reflective sheet of claim 1, wherein the inert fine particles are inorganic particles, organic polymer cross-linked particles or inorganic-organic composite particles.

6. The reflective sheet of claim 1 or 5, wherein the inert fine particles are inorganic particles having a refractive index of 1.9 or higher.

7. The reflective sheet of claim 1, which is rendered porous by continuous pores formed in the reflective sheet.

8. The reflective sheet of any of claims 1 to 7, which is at least monoaxially oriented.

9. A method for producing the reflective sheet of claim 8, comprising:

    preparing a thermoreversible sol/gel solution
    comprising a polyolefin, inert fine particles and a solvent,
    extruding the thermoreversible sol/gel solution from a slit to form a gelled sheet, and
    removing the solvent from the gelled sheet and then stretching the sheet.

10. A substrate-attached reflective sheet comprising the reflective sheet of any of claims 1 to 8 and a substrate film bonded on at least one surface of the reflective sheet.

11. The substrate-attached reflective sheet of claim 10, wherein the substrate film exists on both surfaces of the reflective sheet.

12. The substrate-attached reflective sheet of claim 11, wherein the substrate film on one surface of the reflective sheet is a transparent film, and the substrate film on the other surface is a transparent or opaque film.

13. Use of the reflective sheet of any of claims 1 to 8 or the substrate-attached reflective sheet of any of claims 10 to 12 as a lighting reflector of a display.

Fig. 1

Fig. 2

| INTERNATIONAL SEARCH REPORT | International application No. |
|---|---|
| | PCT/JP2006/308000 |

**A. CLASSIFICATION OF SUBJECT MATTER**
*G02B5/08*(2006.01)i, *G02F1/1335*(2006.01)i

According to International Patent Classification (IPC) or to both national classification and IPC

**B. FIELDS SEARCHED**

Minimum documentation searched (classification system followed by classification symbols)
G02B5/08, G02F1/1335

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-317680 A (Mitsui Chemicals, Inc.),<br>11 November, 2004 (11.11.04),<br>Full text; particularly, Claims 1 to 6;<br>Par. Nos. [0028], [0034]<br>(Family: none) | 1-8,10-13<br>9 |
| X<br>Y | JP 2004-307730 A (Mitsui Chemicals, Inc.),<br>04 November, 2004 (04.11.04),<br>Full text; particularly, Claims 1 to 6;<br>Par. Nos. [0018], [0026], [0029]<br>(Family: none) | 1-8,10-13<br>9 |
| X<br>Y | JP 11-174213 A (Mitsui Chemicals, Inc.),<br>02 July, 1999 (02.07.99),<br>Full text; particularly, Claims 1 to 4;<br>Par. Nos. [0022] to [0023]<br>(Family: none) | 1-8,10-13<br>9 |

[X] Further documents are listed in the continuation of Box C.    [ ] See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 July, 2006 (27.07.06) | 08 August, 2006 (08.08.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/308000

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 8-262208 A (Mitsui Toatsu Chemicals, Inc.),<br>11 October, 1996 (11.10.96),<br>Full text; particularly, Claims 1 to 4;<br>Par. Nos. [0022] to [0023]<br>& EP 724181 A2          & EP 724181 B1<br>& US 5710856 A          & DE 69633082 E<br>& SG 38923 A1           & TW 344032 A<br>& KR 200200 B1 | 1-8,10-13<br>9 |
| X<br>Y | JP 2003-716367 A (Yupo Corp.),<br>24 June, 2003 (24.06.03),<br>Full text; particularly, Claims 1 to 6;<br>Par. Nos. [0017], [0026]<br>& EP 1424571 A1         & US 2004/0228146 A1<br>& US 6914719 B2         & AU 2002323897 A1<br>& WO 03/014778 A1       & CN 1578916 A<br>& KR 2004035715 A1 | 1-8,10-13<br>9 |
| X<br>Y | JP 2002-254558 A (Mitsubishi Kagaku Sanshi Corp.),<br>11 September, 2002 (11.09.02),<br>Full text; particularly, Claims 1 to 5;<br>Par. Nos. [0005] to [0007]<br>(Family: none) | 1-8,10,13<br>9,11-12 |
| Y | JP 2004-51772 A (Teijin Ltd.),<br>19 February, 2004 (19.02.04),<br>Full text; particularly, Claims 1 to 12<br>(Family: none) | 9 |
| Y | JP 60-242035 A (Toa Nenryo Kogyo Kabushiki Kaisha),<br>02 December, 1985 (02.12.85),<br>Full text; particularly, Claims<br>& EP 160551 A           & EP 160551 B<br>& US 4588633 A          & US 4620955 A | 9 |
| Y | JP 10-265608 A (Asahi Chemical Industry Co., Ltd.),<br>06 October, 1998 (06.10.98),<br>Full text; particularly, Claim 1; Par. No. [0001]<br>(Family: none) | 9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013925 A
- JP 59008782 A
- JP 57060119 U
- JP 2005004195 A
- JP 2005307730 A
- WO 9101346 A
- JP 7230004 A
- JP 2002098811 A
- JP 2003136619 A